# FASCICULE DE BREVET EUROPEEN

(11) **EP 3 095 628 B1**
(45) Date de publication et mention de la délivrance du brevet: **11.10.2017**
(21) Numéro de dépôt: 16170536.3
(22) Date de dépôt: 20.05.2016
(51) Int. Cl.: B60J 5/10, B60J 1/00, B60J 1/18, B62D 25/12, B60J 10/34, B60J 10/80

(54) **ENSEMBLE DOUBLURE-PONTET POUR VOLET PLASTIQUE**
VERSTÄRKUNGS-ÜBERBRÜCKUNGS-EINHEIT FÜR HECKTÜR
PANEL-REINFORCEMENT SET FOR A PLASTIC TRUNK LID

(30) Priorité: 20.05.2015 FR 1554529
(43) Date de publication de la demande: 23.11.2016
(73) Titulaire: Flex-N-Gate France, 75008 Paris (FR)
(72) Inventeur: VERBRUGGHE, Jérôme, 90300 ELOIE (FR)
(74) Mandataire: Lavoix

(56) Documents cités:
- EP-A1- 2 502 770
- WO-A1-2011/073544
- FR-A1- 2 945 480

## Description

La présente invention concerne un ensemble destiné à faire partie d'un volet de coffre pour véhicule automobile.

Le document EP 2 502 770 A1 divulgue un tel ensemble, ayant les caractéristiques du préambule de la revendication 1.

Habituellement, la doublure d'un volet de coffre porte une lunette arrière fixée sur la doublure par collage. Le collage doit être parfaitement étanche pour éviter l'intrusion de l'eau par le volet de coffre dans le véhicule.

Cependant, un tel volet de coffre pour véhicule ne donne pas entière satisfaction. En particulier, une doublure en plastique issue par exemple d'un moulage montre des problèmes de rigidité au niveau des montants latéraux du volet de coffre.

L'homme du métier a essayé de pallier ce manque de rigidité du volet de coffre par l'utilisation de pontets de renfort au niveau des montants latéraux. Par contre, cette modification n'a pas permis jusqu'à ce jour de garantir une étanchéité parfaite au niveau de la lunette arrière, c'est pourquoi, l'utilisation des pontets a été abandonnée en faveur de l'étanchéité de la lunette arrière.

La présente invention a notamment pour but de proposer un ensemble pour renforcer la doublure d'un volet de coffre, conservant en outre une étanchéité satisfaisante entre la lunette arrière et l'ensemble.

A cet effet, l'invention a pour objet un ensemble selon la revendication 1.

Les avantages d'un tel ensemble sont multiples et sont résumés de manière non-exhaustive ci-dessous.

L'ensemble selon l'invention permet de rigidifier le volet de coffre d'un véhicule, tout en permettant l'étanchéité de la ligne de colle entre la lunette arrière et la doublure et le pontet. L'utilisation d'un pontet fixé sur la doublure permet également une plus grande liberté pour la conception du volet de coffre d'un véhicule.

Grâce à la lamelle, une surface de contact en forme de chicane est formée entre le logement de la doublure et le pontet, ce qui permet de réduire la probabilité d'intrusion de colle en provenance de la ligne de colle entre la doublure et le pontet.
- L'ensemble selon l'invention peut comprendre une ou plusieurs des caractéristiques des revendications 2 à 9, prise(s) isolément ou suivant toute combinaison techniquement possible.
- L'invention a aussi pour objet un véhicule automobile selon la revendication 10.

L'invention sera mieux comprise à la lecture de la description qui va suivre, donnée uniquement à titre d'exemple, et faite en se référant aux dessins annexés, sur lesquels :
- la figure 1 est une vue arrière d'un ensemble selon une direction de conduite normale d'un véhicule automobile selon un mode de réalisation de l'invention ;
- la figure 2 est une vue de détail d'une première partie de l'ensemble représenté sur la figure 1 ;
- la figure 3 est une vue de détail d'une deuxième partie de l'ensemble représenté sur la figure 1 ; et
- la figure 4 est une vue schématique en coupe transversale de la première partie de l'ensemble représentée sur la figure 2.

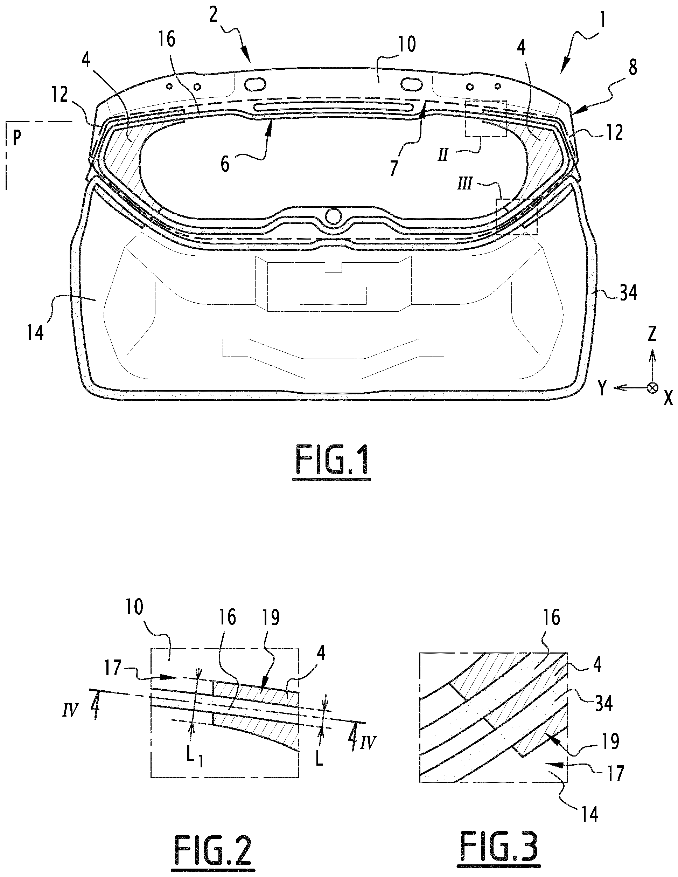

On a représenté sur la figure 1 un ensemble 1 destiné à faire partie d'un volet de coffre d'un véhicule automobile (non représenté).

Dans la présente description, les termes « supérieur » ou « haut », et « inférieur » ou « bas » sont définis par rapport à un véhicule avec un volet de coffre dans une position fermée, sauf lorsqu'ils ont un sens local. Un repère orthogonal est représenté sur la figure 1, dans lequel la direction « haut » ou « vertical » est désignée par la référence Z. Par ailleurs, les termes « avant » et « arrière » sont définis par rapport au sens de déplacement du véhicule dans la direction désignée par la référence X. Les parties « latérales » ou « horizontales » de l'ensemble 1 sont relatives à la référence Y. Les termes « intérieurs » et « extérieurs » sont définis par rapport à un volume inclus dans le véhicule automobile, sauf lorsqu'ils ont un sens local.

L'ensemble 1 représenté sur la figure 1 comporte une doublure 2 et au moins un pontet 4 définissant ensemble une ouverture 6 destinée à être recouverte par une lunette arrière 7 d'un volet de coffre.

Généralement, cette ouverture 6 est localisée dans la partie supérieure de la doublure 2. Ainsi, la doublure 2 définit un cadre 8 formant au moins une partie de l'ouverture 6.

Le cadre 8 de la doublure 2 comprend un montant supérieur 10 qui s'étend sensiblement selon la direction horizontale Y, au moins deux montants opposés 12 qui s'étendent sensiblement selon la direction verticale Z latéralement sur la doublure 2, et une partie inférieure 14 s'étendant sensiblement selon une direction Y horizontale.

Il est possible de réaliser le cadre 8 selon une autre forme, notamment avec plus de deux montants opposés 12.

La doublure 2 peut s'étendre dans un plan vertical défini par les directions Y et Z, ou être inclinée par rapport à ce plan vertical. De même, il est envisageable que la doublure 2 possède une forme gauche, c'est-à-dire non plane.

Dans l'exemple représenté sur la figure 1, l'ensemble 1 est destiné à être fixé par le montant supérieur 10 sur un châssis du véhicule automobile. Cependant, il est possible de choisir d'autres points de fixation de la doublure 2 sur le châssis du véhicule automobile.

De même, il est envisageable de réaliser un ensemble 1 en deux parties, par exemple, pour des volets de coffre fixés par les deux montants opposés sur le châssis du véhicule.

Au moins une première ligne de colle 16 s'étend autour de l'ouverture 6 sur au moins une partie d'une surface extérieure 17 de la doublure 2 et au moins une partie d'une surface extérieure 19 du pontet 4, comme cela est représenté sur les figures 1 à 4. Cette ligne de colle 16 est de préférence continue. La ligne de colle 16 est destinée à fixer la lunette arrière 7 sur l'ensemble 1 de manière étanche. De ce fait, la ligne de colle 16 s'étend sensiblement selon une courbe gauche P parallèle à une surface intérieure 9 de la lunette arrière 7.

La ligne de colle 16 présente avantageusement une largeur L parallèlement à la lunette arrière 7 de 22 mm en vision. La ligne de colle 16 présente une épaisseur perpendiculairement à la lunette arrière 7 de 5 mm. La ligne de colle 16 est formée par une colle ayant des propriétés d'étanchéité et de tenue à l'arrachement variant suivant le cahier des charges des constructeurs.

La doublure 2 est réalisée en matière plastique par moulage, par exemple en polypropylène, par exemple du type PP TD 30, PP TD 40 ou PP TD 50. Il est également envisageable d'utiliser du plastique thermodurcissable, des matières composites ou du carbone pour former le cadre 8 de la doublure 2.

La doublure 2 et la lunette arrière 7 forment ensemble un logement 18.

Le logement 18 comporte un rebord 11 à sa périphérie.

De préférence, le logement 18 est formé en partie par la doublure 2 au niveau des montants opposés 12 du cadre 8.

Les montants opposés 12 de la doublure 2 peuvent avoir une section transversale, perpendiculairement à la première ligne de colle 16, en forme de U. Dans ce cas, le logement 18 comporte également une section transversale, perpendiculairement à la première ligne de colle 16, en forme de U.

Cependant, il est possible de réaliser d'autres formes que la forme en U, par exemple, une forme pouvant être réalisée par l'homme du métier. La forme en U permet en particulier d'augmenter la rigidité des montants opposés 12.

Les montants opposés 12 sont avantageusement formés par moulage.

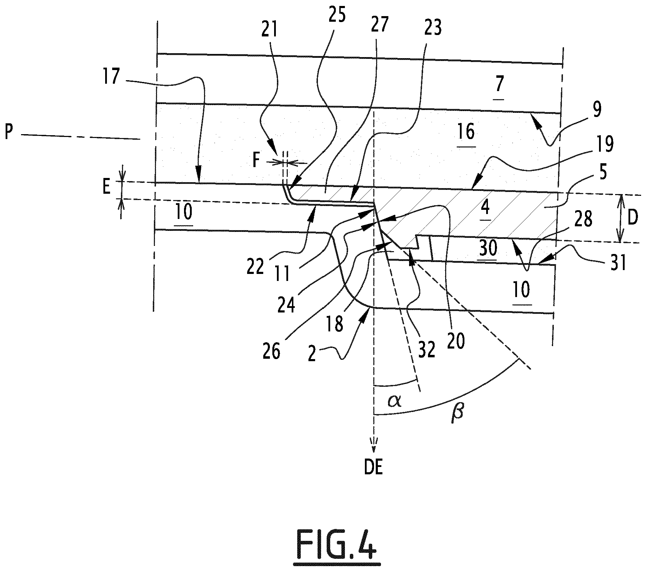

Comme visible sur la figure 4, le logement 18 comporte une surface d'appui 20 s'étendant selon un plan incliné à une direction d'épaisseur DE. La direction d'épaisseur DE est sensiblement perpendiculaire à la lunette arrière 7. Ainsi, la surface d'appui 20 définit localement un angle compris entre 5° et 25°, de préférence de 15° avec la direction d'épaisseur DE.

La surface d'appui 20 est destinée à recevoir au moins une partie du pontet 4 en appui. Ainsi, le pontet 4 est stabilisé dans le logement 18 et/ou le jeu du pontet dans une direction parallèle à la courbe gauche P est réduit.

La surface d'appui 20 du logement 18 peut comporter une surface rugueuse et/ou des nervures s'étendant perpendiculairement à la direction d'épaisseur DE, représentée sur la figure 4.

La doublure 2 comporte une encoche 22 définissant en partie le logement 18.

Cette encoche 22 comporte au moins une surface de la doublure 2 s'étendant dans un plan perpendiculaire à la direction d'épaisseur DE.

L'encoche 22 présente une largeur L1 selon une direction perpendiculaire à la ligne de colle 16 et à la direction d'épaisseur DE égale ou supérieure à la largeur L de la ligne de colle 16.

Dans l'exemple représenté sur la figure 4, l'encoche 22 comporte une surface 23 s'étendant parallèlement à la courbe gauche P, et une surface courbée 25, non-perpendiculaire à la direction d'épaisseur DE, et reliant la surface extérieure 17 de la doublure 2 avec la surface 23 de la doublure 2.

Avantageusement, l'encoche 22 est réalisée sur le rebord 11 du logement 18. L'encoche 22 est destinée à recevoir une lamelle souple 27 du pontet 4 et comporte par conséquent une forme complémentaire de celle de la lamelle souple 27. La lamelle souple 27 sera décrite ultérieurement.

Le pontet 4 peut être fabriqué dans le même matériau que la doublure, ou dans un matériau ayant une rigidité supérieure.

Le pontet 4 comporte un corps 5 de forme sensiblement complémentaire à celle du logement 18 défini par la doublure 2 et la lunette arrière 7.

Le corps 5 présente une épaisseur D selon la direction d'épaisseur DE, comprise entre 2,5 et 3,5 mm, de préférence de 3 mm.

Le corps 5 du pontet 4 comporte au moins une surface de butée 24 en partie transversale selon la première ligne de colle 16.

La surface de butée 24 s'étend dans un plan sensiblement incliné par rapport à la direction d'épaisseur DE. La surface de butée 24 est destinée à buter contre la surface d'appui 20 du logement 18. Par conséquent, la surface de butée 24 est avantageusement en contact plan avec la surface d'appui 20 du logement 18 de la doublure 2. Par ailleurs, la surface de butée 24 du corps 5 définit un angle α compris entre 5° et 25°, de préférence de 15°, avec la direction d'épaisseur DE.

Le corps 5 du pontet 4 peut comporter deux surfaces de butée 24 opposées et coopérant avec les deux surfaces d'appui 20 du logement 18 de la doublure 2. De cette manière, le pontet 4 est serré dans le logement 18. Dans ce cas, les deux surfaces de butée 24 donnent au pontet 4 une forme localement cunéiforme. Cette forme permet le serrage du ponte 4 dans le logement 18 du montant 12.

En outre, la surface de butée 24 peut comporter une surface rugueuse et/ou des nervures s'étendant perpendiculairement à la direction d'épaisseur DE dans le logement 18. Ainsi, le pontet 4 est tenu fermement dans le logement 18.

La direction d'épaisseur DE du pontet 4 est localement, au niveau du logement 18, sensiblement perpendiculaire à la courbe gauche P.

Le pontet 4 peut comporter de manière optionnelle une surface d'alignement 26 adjacente à la surface de butée 24 dans la direction d'épaisseur DE du pontet 4. Cette surface d'alignement 26 du pontet 4, visible sur la figure 4, définit un angle aigu avec la surface d'appui 20 du logement 18. Plus précisément, dans l'exemple représenté, la surface d'alignement forme un angle β avec la direction d'épaisseur DE compris entre 35° et 55°, de préférence de 45°.

La surface d'alignement 26 permet d'aligner le pontet 4 lors de son insertion dans le logement 18. Ainsi l'insertion du pontet 4 dans le logement 18 est facilitée lors de l'assemblage du pontet 4 et de la doublure 2. Cet assemblage sera décrit ultérieurement.

Le pontet 4 comporte une surface intérieure 28, sensiblement perpendiculaire à la direction d'épaisseur DE. La surface intérieure 28 est tournée selon la direction d'épaisseur DE vers l'intérieur du véhicule automobile.

Le pontet 4 est par exemple fixé sur la doublure 2 par une couche de colle 30. Dans ce cas, la couche de colle 30 est située entre une surface de fond 31 du logement 18 et la surface intérieure 28 du corps 5 de la doublure 2. Ainsi, la surface intérieure 28 du pontet 4 est reliée par la couche de colle 30 à la surface de fond 31 du logement 18.

Dans l'exemple représenté sur la figure 4, le corps 5 du pontet 4 comporte un rebord 32 en saillie par rapport à la surface intérieure 28. Ceci a pour effet de bloquer un déplacement au-delà de la surface intérieure 28 de la couche de colle 30.

De manière alternative, le pontet 4 est par exemple fixé sur la doublure 2 par une autre méthode de fixation chimique ou mécanique, avantageusement par soudage, rivetage ou vissage.

Avantageusement, la lamelle souple 27 du pontet 4 prolonge une extrémité du corps 5 du pontet 4 selon la première ligne de colle 16. La lamelle souple 27 est située au moins dans une zone du pontet 4 située sous la première ligne de colle 16.

De manière alternative, la lamelle souple 27 peut également s'étendre sur tout le bord du pontet 4.

La lamelle souple 27 est destinée à coopérer avec l'encoche 22 de la doublure 2. Elle est donc complémentaire à l'encoche 22.

La lamelle souple 27 présente une épaisseur E inférieure à l'épaisseur D du corps 5. Ainsi, la lamelle souple 27 est plus souple que le corps 5 du pontet 4.

L'épaisseur E de la lamelle souple 27 est par exemple comprise entre 1 et 3 mm, de préférence d'environ 1,3 mm. L'épaisseur E de la lamelle souple 27 dépend de la matière du pontet 4. L'épaisseur E este choisie en fonction de la souplesse souhaitée. Plus l'épaisseur E est réduite, plus la souplesse de la lamelle souple 27 augmente.

La lamelle 27 définit une fente 21 avec l'encoche 22 de la doublure 2. La forme de la fente 21 est définie par l'encoche 22 et la lamelle 20. La fente 21 présente une largeur F selon la première ligne de colle 16 comprise entre 0,1 et 1 mm, de préférence d'environ 0,2 mm.

Ainsi, l'intrusion de la colle de la ligne de colle 16 dans la fente 21 est minimisée. De cette manière, la consommation de colle de la ligne de colle 16 est minimisée.

Grâce à la lamelle souple 27, il est possible de créer un alignement local selon la direction d'épaisseur DE du pontet 4. De cette manière, la surface extérieure 19 du pontet 4 et la surface extérieure 17 de la doublure 2 forment une jonction entre l'encoche 22 et la lamelle 27 située dans un même plan perpendiculaire à la direction d'épaisseur DE.

En conséquence, l'épaisseur de la ligne de colle 16 est homogène et l'étanchéité de la ligne de colle 16 est maximisée.

L'ensemble 1 peut être situé sous une seconde ligne de colle 34, ou plusieurs lignes de colle.

La seconde ligne de colle 34 s'étend principalement dans la partie 14 de la doublure 2. Par exemple, elle s'étend sur la périphérie inférieure de la doublure 2.

La ligne de colle 34 permet la fixation d'un panneau de couverture du véhicule automobile, non représenté, couvrant l'ensemble 1 au moins partiellement.

Ce panneau de couverture du véhicule automobile peut être par exemple en matière plastique. Selon une variante, le panneau de couverture du véhicule automobile est en matière métallique ou en carbone.

Tout ce qui a été décrit ci-dessus concernant la première ligne de colle 16 s'applique de la même manière à la seconde ligne de colle 34. En particulier, la description concernant une première interface entre la doublure 2 et le pontet 4 localement recouverte par la première ligne de colle 16 pour porter la lunette arrière 7 s'applique de la même manière à une seconde interface entre la doublure 2 et le pontet 4 localement recouverte par la seconde ligne de colle 34 pour porter le panneau de couverture du véhicule automobile.

Dans un mode de réalisation particulier (non représenté), le pontet 4 est en deux ou en plusieurs parties. Ainsi, la liberté de forme et la liberté de style de l'ouverture 6 définie par l'ensemble 1 est augmentée. Cependant, un pontet formé d'une pièce unique donne une meilleure rigidité au volet de coffre qu'un pontet formé de plusieurs parties.

L'ensemble 1 permet de simplifier l'outillage pour la fabrication de la doublure, par exemple car il n'est pas nécessaire de rajouter de mouvements dans l'outillage.

L'assemblage de l'ensemble 1 va maintenant être décrit.

Initialement, la doublure 2 est fournie. Ensuite, une couche de colle 30 est appliquée sur la surface de fond 31 du logement 18. De manière alternative, la couche de colle 30 est appliquée à la surface inférieure 28 du pontet 4.

Après, au moins un pontet 4 est inséré dans le logement 18 avec sa surface inférieure 28 en regard de la surface du fond 31 du logement 18. En même temps, la lamelle 27 du pontet 4 est insérée dans l'encoche 22 de la doublure 2.

Pendent l'insertion du pontet 4 dans l'encoche 22, la surface d'alignement 26 du pontet 4 peut venir en contact avec le rebord 11 du logement 18. Dans ce cas, la surface d'alignement 26 favorise l'alignement du pontet selon la première ligne de colle 16. Ainsi lorsqu'une force est exercée sur le pontet 4 dans une direction parallèle à la direction d'épaisseur DE, le pontet s'aligne automatiquement dans le logement 18 grâce à la surface d'alignement 26.

La lamelle souple 27 permet de diminuer la profondeur dans la direction de l'épaisseur DE lors d'un accostage entre pontet 4 et doublure 2.

Ensuite, une première ligne de colle 16 est appliqué sur le pontet 4 et la doublure 2. Avantageusement, cette première ligne de colle 16 s'étend de manière continue autour de l'ouverture 6.

Grâce à la fente 21, la colle de la ligne de colle 16 ne s'infiltre presque pas entre la lamelle souple 27 et la doublure 2.

La lunette arrière 7 est appliquée par pressage de sa surface intérieure 9 sur la première ligne de colle 16 pour être fixée sur la doublure 2 et le pontet 4.

Pendant ce pressage, la lamelle souple 27 peut se déformer selon la direction d'épaisseur DE. Ainsi, l'épaisseur de la ligne de colle est sensiblement homogène dans la direction d'épaisseur DE le long de la ligne de colle 16.

Après la fixation de la lunette arrière 7, une deuxième ligne de colle 34 est éventuellement appliquée sur le pontet 4 et la partie 14 de la doublure 2. Cette deuxième ligne de colle 34 peut comporter par exemple la même épaisseur et largeur que la première ligne de colle 16. La deuxième ligne de colle 34 s'étend en partie au bord de la partie 14 de la doublure 2.

Finalement, un panneau de couverture d'un véhicule automobile (non représenté) est fixé par la deuxième ligne de colle 34 sur l'ensemble 1. Ce panneau de couverture d'un véhicule automobile est de préférence en matière plastique, mais peut également être fabriqué par exemple en métal ou en carbone.

Dans une variante, la deuxième ligne de colle 34 est appliquée avant la fixation de la lunette arrière 7 sur la première ligne de colle 16.

L'étanchéité entre la lunette arrière 7 et/ou le panneau de couverture d'un véhicule automobile et la doublure 2 et le pontet 4 est garantie grâce à la lamelle souple 27.

La surface extérieure 17 de la doublure et la surface extérieure 19 du pontet sont alignées au niveau de la fente 21 dans un plan local perpendiculaire à la direction d'épaisseur DE. Cet alignement garantit une épaisseur homogène de la ligne de colle 16, au moins localement au niveau de la fente 21.

Tout ce qui a été dit concernant l'étanchéité entre la lunette arrière 7 et la doublure 2 et le pontet 4 s'applique pareillement au panneau de couverture d'un véhicule automobile et la doublure 2 et le pontet 4.

Dans le cas où le corps 5 du pontet 4 est légèrement décalé selon la direction d'épaisseur DE, par exemple de +/- 1 mm, la souplesse de la lamelle souple 27 permet de corriger ce décalage afin que la surface supérieure 19 du pontet et la surface extérieure 17 de la doublure 2 restent alignés au niveau de la fente 21. Ainsi, l'épaisseur de la première et/ou de la deuxième ligne de colle reste homogène au niveau de la fente 21.

## Revendications

1. Ensemble (1) destiné à faire partie d'un volet de coffre pour véhicule automobile, l'ensemble (1) comprenant:
- une doublure (2) et au moins un pontet (4) définissant une ouverture (6), et
- une première ligne de colle (16) destinée à fixer une lunette arrière (7) du volet de coffre sur la doublure (2), la lunette arrière (7) définissant une direction d'épaisseur (DE),
le pontet (4) comportant un corps (5), et une extrémité s'étendant selon la première ligne de colle (16), **caractérisé en ce que** l'extrémité forme une lamelle souple (27) destinée à être reçue dans un logement (18) formé par la doublure (2) et la lunette arrière (7).

2. Ensemble (1) selon la revendication 1, dans lequel le logement (18) est formé en partie par la doublure (2), la doublure (2) comportant une encoche (22) définissant en partie le logement (18), l'encoche (22) ayant une largeur (L1) selon une direction perpendiculaire à la ligne de colle (16) et à la direction d'épaisseur (DE), la largeur (L1) étant supérieure ou égale à une largeur (L) de la ligne de colle (16).

3. Ensemble (1) selon la revendication 2, dans lequel l'encoche (22) est définie en partie par une surface (23) de la doublure (2), la surface (23) étant sensiblement perpendiculaire à la direction d'épaisseur (DE).

4. Ensemble (1) selon l'une quelconque des revendications 1 à 3, dans lequel le corps (5) comprend une surface de butée (24) en partie transversale selon la première ligne de colle (16), la surface de butée (24) formant un angle (α) avec la direction d'épaisseur (DE) compris entre 5° et 25°, de préférence sensiblement égale à 15°.

5. Ensemble (1) selon l'une quelconque des revendications 1 à 4, dans lequel le corps (5) du pontet (4) comporte une surface d'alignement (26) formant un angle (β) avec la direction d'épaisseur (DE), l'angle (β) étant compris entre 35° et 55°, de préférence sensiblement égal à 45°.

6. Ensemble (1) selon l'une quelconque des revendications 1 à 5, dans lequel la lamelle souple (27) du pontet (4) possède une épaisseur (E) selon la direction d'épaisseur (DE) comprise entre 1 et 3 mm, et de préférence d'environ 1,3 mm.

7. Ensemble (1) selon l'une quelconque des revendications 1 à 6, dans lequel la lamelle souple (27) définit une fente (21) avec l'encoche (22) du logement (18), la fente (21) ayant une largeur (F) selon la première ligne de colle (16) comprise entre 0,1 mm et 1 mm, de préférence d'environ 0,2 mm.

8. Ensemble (1) selon l'une quelconque des revendications 1 à 7, comprenant une couche de colle (30) située sur une surface intérieure (28) du corps (5) du pontet (4), le corps (5) comportant un rebord (32) en saillie de la surface intérieure (28).

9. Ensemble (1) selon l'une quelconque des revendications 1 à 8, dans lequel l'ensemble (1) comporte en outre une seconde ligne de colle (34) s'étendant sur le pontet (4) et la doublure (2), la doublure (2) comportant une partie (14) destinée à être fixée par la seconde ligne de colle (34) sur un panneau de couverture du véhicule automobile.

10. Véhicule automobile (1) comportant un volet de coffre comprenant un ensemble (1) selon l'une quelconque des revendications 1 à 9.

## Patentansprüche

1. Baugruppe (1), die vorgesehen ist, um Teil einer Kofferraumklappe für ein Kraftfahrzeug zu sein, wobei die Baugruppe (1) aufweist:
- eine Auskleidung (2) und mindestens einen Steg (4), die eine Öffnung (6) definieren, und
- eine erste Klebelinie (16), die vorgesehen ist, um eine Heckscheibe (7) der Kofferraumklappe an der Auskleidung (2) zu befestigen, wobei die Heckscheibe (7) eine Dickenrichtung (DE) definiert,
wobei der Steg (4) aufweist: einen Körper (5) und ein Ende, das sich entlang der erste Klebelinie (16) erstreckt, **dadurch gekennzeichnet, dass** das Ende eine flexible Lamelle (27) ausbildet, die vorgesehen ist, um in einer Aufnahme (18) aufgenommen zu sein, die durch die Auskleidung (2) und die Heckscheibe (7) ausgebildet ist.

2. Baugruppe (1) gemäß Anspruch 1, wobei die Aufnahme (18) teilweise durch die Auskleidung (2) ausgebildet ist, wobei die Auskleidung (2) eine Nut (22) aufweist, die die Aufnahme (18) teilweise definiert, wobei die Nut (22) eine Breite (L1) entlang einer Richtung senkrecht zu der Klebelinie (16) und zu der Dickenrichtung (DE) hat, wobei die Breite (L1) größer oder gleich einer Breite (L) der Klebelinie (16) ist.

3. Baugruppe (1) gemäß Anspruch 2, wobei die Nut (22) teilweise durch eine Fläche (23) der Auskleidung (2) definiert ist, wobei die Fläche (23) im Wesentlichen senkrecht zu der Dickenrichtung (DE) ist.

4. Baugruppe (1) gemäß irgendeinem der Ansprüche 1 bis 3, wobei der Körper (5) eine Anschlagfläche (24) aufweist, die teilweise quer entlang der ersten Klebelinie (16) verläuft, wobei die Anschlagfläche (24) mit der Dickenrichtung (DE) einen Winkel (α) ausbildet, der zwischen 5° und 25° beträgt, vorzugsweise im Wesentlichen gleich 15° ist.

5. Baugruppe (1) gemäß irgendeinem der Ansprüche 1 bis 4, wobei der Körper (5) des Stegs (4) eine Ausrichtungsfläche (26) aufweist, die mit der Dickenrichtung (DE) einen Winkel (β) ausbildet, wobei der Winkel (β) zwischen 35° und 55° beträgt, vorzugsweise im Wesentlichen gleich 45° ist.

6. Baugruppe (1) gemäß irgendeinem der Ansprüche 1 bis 5, wobei die flexible Lamelle (27) des Stegs (4) eine Dicke (E) entlang der Dickenrichtung (DE) hat, die zwischen 1 und 3 mm und vorzugsweise etwa 1,3 mm beträgt.

7. Baugruppe (1) gemäß irgendeinem der Ansprüche 1 bis 6, wobei die flexible Lamelle (27) mit der Nut (22) der Aufnahme (18) einen Schlitz (21) definiert, wobei der Schlitz (21) eine Breite (F) entlang der ersten Klebelinie (16) hat, die zwischen 0,1 mm und 1 mm, vorzugsweise etwa 0,2 mm beträgt.

8. Baugruppe (1) gemäß irgendeinem der Ansprüche 1 bis 7, aufweisend eine Klebeschicht (30), die sich auf einer Innenfläche (28) des Körpers (5) des Stegs (4) befindet, wobei der Körper (5) einen Rand (32) aufweist, der von der Innenfläche (28) hervorsteht.

9. Baugruppe (1) gemäß irgendeinem der Ansprüche 1 bis 8, wobei die Baugruppe (1) ferner eine zweite Klebelinie (34) aufweist, die sich über dem Steg (4) und der Auskleidung (2) erstreckt, wobei die Auskleidung (2) einen Teil (14) aufweist, der vorgesehen ist, um durch die zweite Klebelinie (34) an einer Abdeckplatte des Kraftfahrzeugs befestigt zu sein.

10. Kraftfahrzeug (1), aufweisend eine Kofferraumklappe, die eine Baugruppe (1) gemäß irgendeinem der Ansprüche 1 bis 9 aufweist.

## Claims

1. assembly (1) intended to be part of a motor vehicle trunk lid, the assembly comprising:
- a panel (2) and at least one reinforcement (4) defining an opening (6), and
- a first glue line (16) intended to fasten a rear window (7) of the trunk lid on the panel (2), the rear window (7) defining a thickness direction (DE),
the reinforcement (4) including a body (5), and an end extending along the first glue line (16), **characterized in that** the end forms a flexible blade (27) intended to be received in a housing (18) formed by the panel (2) and the rear window (7).

2. The assembly (1) according to claim 1, wherein the housing (18) is formed partially by the panel (2), the panel (2) including a notch (22) partially defining the housing (18), the notch (22) having a width (L1) in a direction perpendicular to the first glue line (16) and the direction of the thickness (DE), the width (L1) being greater than or equal to a width (L) of the first glue line (16).

3. The assembly (1) according to claim 2, wherein the notch (22) is partly defined by a surface (23) of the panel (2), the surface (23) being substantially perpendicular to the thickness direction (DE).

4. The assembly (1) according to any one of claims 1 to 3, wherein the body (5) comprises a stop surface (24) partially transverse along the first glue line (16), the stop surface (24) forming an angle (α) with the thickness direction (DE) comprised between 5° and 25°, preferably substantially equal to 15°.

5. The assembly (1) according to any one of claims 1 to 4, wherein the body (5) of the reinforcement (4) includes an alignment surface (26) forming an angle (β) with the thickness direction (DE) comprised between 35° and 55°, preferably equal to 45°.

6. The assembly (1) according to any one of claims 1 to 5, wherein the flexible blade (27) of the reinforcement (4) has a thickness (E) in the thickness direction (DE) comprised between 1 and 3 mm, preferably around 1.3 mm.

7. The assembly (1) according to any one of claims 1 to 6, wherein the flexible blade (27) defines a slit (21) with the notch (22) of the housing (18), the slit (21) having a width (F) along the first glue line (16) comprised between 0.1 mm and 1 mm, preferably around 0.2 mm.

8. The assembly (1) according to any one of claims 1 to 7, comprising a layer of glue (30) situated on an inner surface (28) of the body (5) of the reinforcement (4), the body (5) including a rim (32) protruding from the inner surface (28).

9. The assembly (1) according to any one of claims 1 to 8, wherein the assembly (1) further includes a second glue line (34) extending over the reinforcement (4) and the panel (2), the panel (2) including a part (14) intended to be fastened by the second glue line (34) on a cover panel of the motor vehicle.

10. A motor vehicle (1) including a trunk lid comprising an assembly (1) according to any one of claims 1 to 9.
